# EUROPÄISCHE PATENTSCHRIFT

(11) **EP 0 483 563 B1**
(45) Veröffentlichungstag und Bekanntmachung des Hinweises auf die Patenterteilung: **30.03.1994**
(21) Anmeldenummer: 91117249.2
(22) Anmeldetag: 10.10.1991
(51) Int. Cl.: F28F 9/02

(54) **Wärmetauscher**
Heat exchanger
Echangeur de chaleur

(30) Priorität: 02.11.1990 DE 9015085 U
(43) Veröffentlichungstag der Anmeldung: 06.05.1992
(73) Patentinhaber: Behr GmbH & Co., D-70469 Stuttgart (DE)
(72) Erfinder: Halder, Prasanta, Dipl.-Ing., W-7257 Ditzingen 1 (DE); Höing, Jürgen, W-7300 Esslingen (DE)
(74) Vertreter: Riedel, Peter, Dipl.-Ing.

(56) Entgegenhaltungen:
- DE-A- 3 247 502
- DE-C- 956 820
- FR-A- 2 085 294

## Beschreibung

Die Erfindung betrifft einen Wärmetauscher mit einem Rohrboden aus Kunststoff der im Oberbegriff des Anspruchs 1 bzw. 2 angegebenen Gattung. Ein solcher Wärmetauscher ist beispielsweise aus der DE-OS 32 47 502 bekannt. Bei diesem bekannten Wärmetauscher werden die Enden der Rohre in die Öffnungen des Rohrbodens eingepreßt und später erfolgt in einer anderen Maschine das Aufsetzen des Wasserkastens und dessen Reibschweißverbindung mit dem Rohrboden. Ein mit dem Rohrboden versehener Wärmetauscherblock wird somit nicht umgehend mit dem Wasserkasten versehen, sondern teilweise über mehrere Tage zwischengelagert. d.h. für die Wärmetauscherblöcke und Wasserkästen erfolgt eine getrennte Lagerhaltung.

Es ist daher die Aufgabe der vorliegenden Erfindung, einen Wärmetauscher der im Oberbegriff des Anspruchs 1 oder 2 angegebenen Gattung derart weiterzubilden. daß der Wasserkasten am Rohrboden bis zum Zeitpunkt der Reibschweißverbindung sicher. aber im Bedarfsfalle lösbar. befestigt ist.

Diese Aufgabe wird bei einem Wärmetauscher der genannten Art durch die kennzeichnenden Merkmale des Anspruchs 1 oder 2 gelöst. Die wesentlichen Vorteile sind darin zu sehen, daß unmittelbar nach dem Einpressen der Wärmetauscherrohre in den Rohrboden der Wasserkasten aufgesetzt wird, so daß eine getrennte Lagerhaltung von Wärmetauscherblöcken und Wasserkästen nicht erforderlich ist, und daß auch bei längeren Lagerzeiten, bis zum Erzeugen der Reibschweißverbindung, keine Verschmutzung auftritt.

Eine bevorzugte Weiterbildung des Erfindungsgegenstandes besteht darin, daß die Mittel zum formschlüssigen Hintergreifen mindestens zwei an gegenüberliegenden Seiten des Wasserkastens oder Rohrbodens angeordnete Rasthaken umfassen. Dementsprechend sind am Rohrboden oder Wasserkasten Aussparungen vorgesehen, in die die Rasthaken greifen. Durch diese Ausbildung ist der Wasserkasten im Bedarfsfalle leicht lösbar, jedoch nur bis zum Zeitpunkt der Reibschweißverbindung. Da sich während des Reibschweißvorgangs der Wasserkasten bezogen auf die Rohrbodenebene etwas setzt. sind Rasthaken und Kante nach erfolgter Reibschweißung nicht mehr in Eingriff, d.h. ihre Funktion erfüllen sie bestimmungsgemäß lediglich bis zur flüssigkeitsdichten Verbindung des Wasserkastens auf dem Rohrboden.

Bekanntlich gibt es Wärmetauscher mit solcher Rohrgruppeneinteilung, die eine unsymmetrische Gestaltung von Trennwänden im Wasserkasten erforderlich macht. Dies kann dazu führen, daß der Wasserkasten, wenn er um 180° gedreht auf den Boden aufgesetzt wird, am Boden befestigt werden kann, ohne daß der Montagefehler bemerkt wird. Auf dieses Problem wurde in dem DE-GM 87 16 312 hingewiesen. Um auch diesem Problem zu begegnen, besteht eine besonders bevorzugte Weiterbildung des Erfindungsgegenstandes darin, daß die Rasthaken und Aussparungen, am Umfang der Rohrbodenfläche unsymmetrisch angeordnet sind. Somit ist sichergestellt, daß der Wasserkasten nur in einer einzigen Position auf den Rohrboden aufgesetzt werden kann, und zwar in derjenigen, bei der die Trennwände die vorbestimmte Lage gegenüber dem Rohrboden einnehmen.

Wie bereits erwähnt, wird beim Reibschweißvorgang der Wasserkasten um ein bestimmtes Maß, welches Schweißtiefe genannt wird, dem Rohrboden angenähert, wobei sich Rasthaken und Kante um denselben Betrag voneinander entfernen. Damit dadurch keine störenden Vorsprünge entstehen, wird vorgeschlagen, daß die Form der Aussparungen und die Länge der Rasthaken so gestaltet sind, daß nach erzeugter Reibschweißverbindung die Rasthaken sich vollständig innerhalb der Kontur des Wasserkastens befinden. Zur Montageerleichterung und Selbstzentrierung ist es zweckmäßig, daß die Rasthaken und Aussparungen mit schräg verlaufenden Leitflächen versehen sind. Es ist darüber hinaus von Vorteil, daß der Rohrboden mit den Rasthaken einstückig ausgebildet ist, d.h. dieses Teil kann als ein einziges Spritzgußteil hergestellt werden. Da bei Kunststoffteilen bekanntlich in Richtung der längsten Erstreckung der größte Verzug auftritt, ist es zweckmäßig, die Rasthaken an den Schmalseiten der Rohrbodenflächen anzuordnen, damit sichergestellt ist, daß sich die Enden des Wasserkastens nicht vom Boden abheben.

Die Erfindung ist nachstehend anhand der Zeichnung näher erläutert.

In der Zeichnung zeigt:
- Fig. 1: die Seitenansicht eines Teils eines Wärmetauschers;
- Fig. 2: die Draufsicht auf einen Wasserkasten des Wärmetauschers;
- Fig. 3: eine vergrößerte Darstellung der Einzelheit III in Fig. 2;
- Fig. 4: eine Ansicht gemäß Pfeil IV in Fig. 3;
- Fig 5a und Fig. 5b: jeweils eine Schnitt entlang der Linie V-V in Fig. 3;
- Fig. 5c: eine Ausführungsvariante von Fig. 5a.

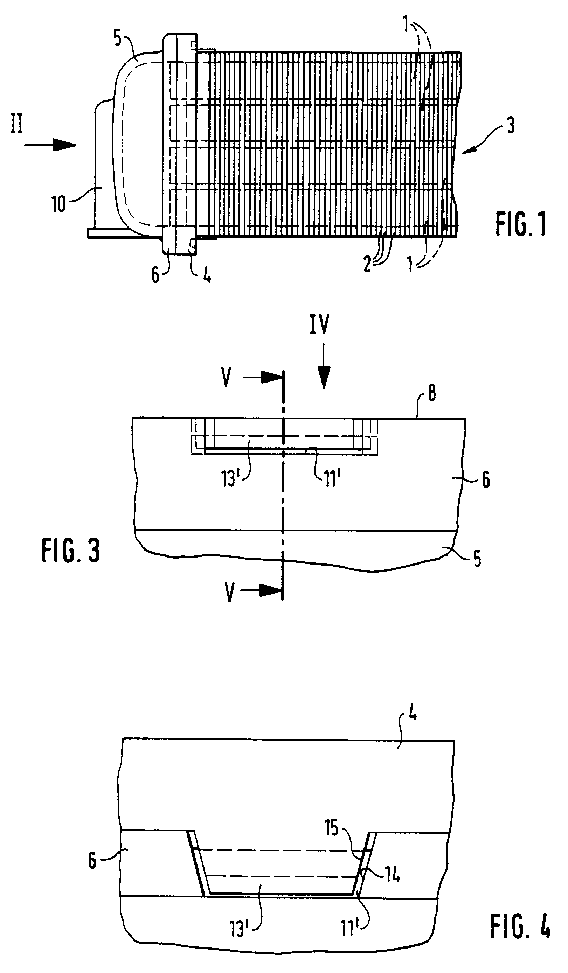

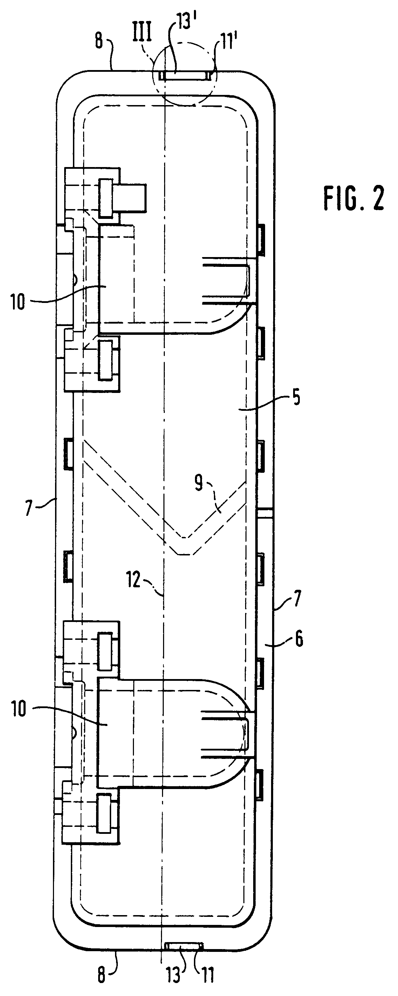

In **Fig. 1** ist ein aus mehreren parallel verlaufenden Rohren 1 mit quer dazu verlaufenden Rippen 2 bestehender Wärmetauscherblock 3 dargestellt, wobei die Enden der Rohre 1 in einem Rohrboden 4 befestigt sind. Der Rohrboden 4 besteht aus Kunststoff und auf diesen ist durch Reibschweißen ein ebenfalls aus Kunststoff bestehender Wasserkasten 5 flüssigkeitsdicht befestigt und zwar mittels eines Wasserkastenfußes 6, der entlang des gesamten Randes auf einer entsprechenden Fläche des Rohrbodens 4 aufliegt. Mit 10 ist ein Zu- oder Ablaufanschluß bezeichnet.

In **Fig. 2** ist die Draufsicht auf den Wasserkasten 5 des Wärmetauschers gemäß Pfeil II in Fig. 1 gezeigt. Wie aus dieser Darstellung zu ersehen ist, verläuft der Wasserkastenfuß 6 entlang des Randes einer Rechteckform, die zwei lange Seiten 7 und zwei Schmalseiten 8 besitzt. Der Wasserkasten ist in seinem Innern mit einer unsymmetrisch angeordneten Trennwand 9 versehen, die in Fig. 2 mit gestrichelter Linie dargestellt ist. Ferner sind aus Fig. 2 Zulauf- bzw. Ablaufanschlüsse 10 ersichtlich. An jeder der Schmalseiten 8 ist eine Aussparung 11, 11' vorgesehen, die unsymmetrisch zur Längsmittelebene 12 des Wasserkastens 5 angeordnet sind. In die Aussparungen greifen Rasthaken 13 und 13', die an dem aus Fig. 2 nicht ersichtlichen Rohrboden 4 angespritzt sind. Die Aussparung 11' und der Rasthaken 13' sind breiter als die Aussparung 11 und der Rasthaken 13, so daß zusätzlich zu der unsymmetrischen Anordnung, auch aus Gründen der Breite eine falsche Zuordnung des Wasserkastens 5 zum Rohrboden ausgeschlossen ist.

**Fig. 3** zeigt eine vergrößerte Darstellung der Einzelheit III in Fig. 2. In dieser Zeichnung sind mit 5 der Wasserkasten, mit 6 der Wasserkastenfuß und mit 8 die Schmalseite bezeichnet. In der Aussparung 11' befindet sich der Rasthaken 13', dessen Form so bemessen ist, daß er nicht über die Kontur des Wasserkastenfußes 6 hinaussteht.

**Fig. 4** zeigt die Ansicht gemäß Pfeil IV in Fig. 3. Aus dieser Darstellung ist zu ersehen, daß der Rasthaken 13' am Rohrboden 4 angeformt ist und der Rasthaken in die Öffnung 11' des Wasserkastenfußes 6 greift. Sowohl die Aussparung 11' als auch der Rasthaken 13' besitzen schräg verlaufende Leitflächen 14 bzw. 15, die einem erleichterten Einführen und Zentrieren der Teile dienen.

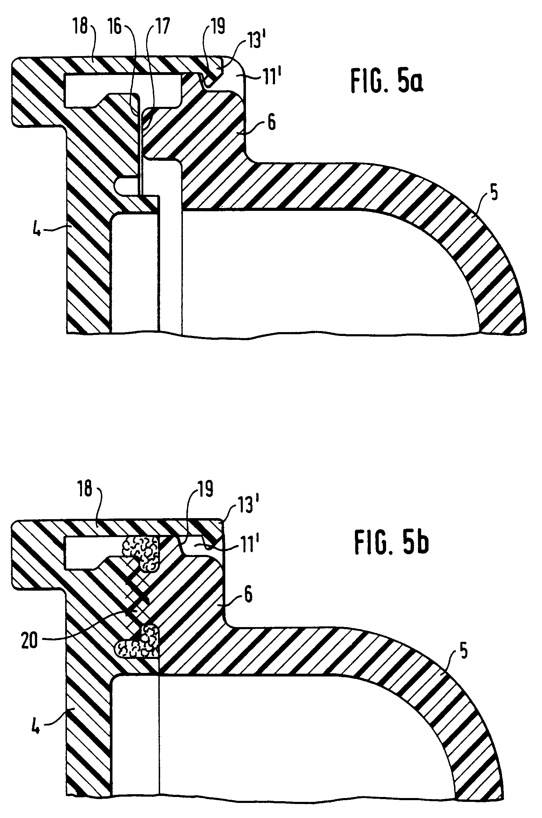

In **Fig. 5a** ist ein Schnitt nach der Linie V-V in Fig. 3 gezeigt und zwar in der Darstellung vor Durchführung der Reibschweißverbindung. Der Rohrboden 4 besitzt dabei eine Schweißfläche 16, auf der der Wasserkastenfuß 6 mit seiner Schweißfläche 17 liegt. Zu beiden Seiten der Schweißflächen 16 und 17 sind Ausnehmungen bzw. Vertiefungen vorhanden, die wie Fig. 5b zeigt, zur Aufnahme geschmolzenen Schweißguts und somit als Schweißgratspeicher dienen. Am Rohrboden 4 ist ein Arm 18 angeformt, an dessen freiem Ende sich der Rasthaken 13' befindet.

Der Rasthaken 13' liegt in der Ausnehmung 11' des Wasserkastenfußes 6 und hintergreift somit eine Kante 19, so daß der Wasserkasten 5 sicher auf dem Rohrboden 4 gehalten wird. Die Länge des Armes 18 gewährleistet eine ausreichende Elastizität, so daß der Wasserkasten die für die Reibschweißverbindung erforderliche Schwingung gegenüber dem Rohrboden ausführen kann.

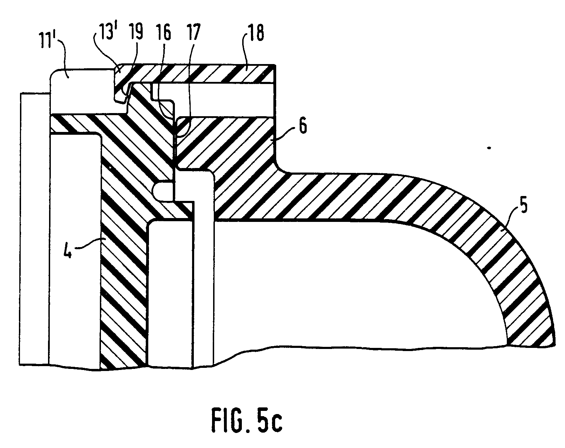

**Fig. 5c** zeigt eine Ausführungsvariante von Fig. 5a, bei der der Arm 18 und Rasthaken 13' am Wasserkastenfuß 6 und die Ausnehmung 11' am Boden 4 angeordnet ist.

In **Fig. 5b** ist die Anordnung gemäß dem Schnitt nach der Linie V-V in Fig. 3 dargestellt, allerdings im Zustand der bereits durchgeführten Reibschweißung. Es ist ersichtlich, daß durch den Reibschweißvorgang der Wasserkasten 5 weiter gegen den Boden 4 verschoben ist. Dadurch entfernt sich der Rasthaken 13' von der Kante 19, er befindet sich jedoch auch in dieser Lage noch innerhalb der Kontur des Wasserkastens 5 bzw. Wasserkastenfußes 6. Mit dem Bezugszeichen 20 ist die verschweißte Zone, in der das Kunststoffmaterial des Wasserkastenfußes 6 und des Rohrbodens 4 erweicht und miteinander verschmolzen ist, bezeichnet.

## Patentansprüche

1. Wärmetauscher mit einem Rohrboden (4) aus Kunststoff und einer Vielzahl parallel verlaufender Rohre (1), deren Enden in dem Rohrboden (4) dichtend aufgenommen sind und mit einem Kunststoffwasserkasten (5), der mittels Reibschweißen auf dem Rohrboden (4) flüssigkeitsdicht befestigt ist, wobei sowohl der Rohrboden (4) als auch der Wasserkasten (5) eine ebene Fläche (16, 17) aufweisen, die zur Reibschweißverbindung dienen, **dadurch gekennzeichnet,** daß der Wasserkasten (5) eine Kante 19 aufweist und daß am Rohrboden (4) Mittel (13, 13') zum formschlüssigen Hintergreifen der Kante (19) vorgesehen sind, wobei diese Mittel und Kante nur solange in Wirkverbindung stehen, bis die Reibschweißverbindung hergestellt ist.

2. Wärmetauscher mit einem Rohrboden (4) aus Kunststoff und einer Vielzahl parallel verlaufender Rohre (1), deren Enden in dem Rohrboden (4) dichtend aufgenommen sind und mit einem Kunststoffwasserkasten (5), der mittels Reibschweißen auf dem Rohrboden (4) flüssigkeitsdicht befestigt ist, wobei sowohl der Rohrboden (4) als auch der Wasserkasten (5) eine ebene Fläche (16, 17) aufweisen, die zur Reibschweißverbindung dienen, **dadurch gekennzeichnet,** daß der Rohrboden (4) eine Kante aufweist und am Wasserkasten (5) Mittel zum formschlüssigen Hintergreifen der Kante vorgesehen sind, wobei Mittel und Kante nur solange in Wirkverbindung stehen, bis die Reibschweißverbindung hergestellt ist.

3. Wärmetauscher nach Anspruch 1 oder 2, **dadurch gekenn****zeichnet,** daß die Mittel mindestens zwei an gegenüberliegenden Seiten (7, 8) des Wasserkastens (5) oder Rohrbodens (4) angeordnete Rasthaken (13, 13') umfassen.

4. Wärmetauscher nach Anspruch 3, **dadurch gekennzeichnet,** daß am Rohrboden (4) oder Wasserkasten (5) Aussparungen (11, 11') vorgesehen sind, in die Rasthaken (13, 13') greifen.

5. Wärmetauscher nach Anspruch 4, **dadurch gekennzeichnet,** daß Rasthaken (13, 13') und Aussparungen (11, 11') bezogen auf die Rohrbodenfläche unsymmetrisch angeordnet sind.

6. Wärmetauscher nach Anspruch 1 und 4, **dadurch gekenn****zeichnet,** daß die Form der Aussparungen (11, 11') und die Länge der Rasthaken (13, 13' bzw. 18) so gestaltet sind, daß nach erzeugter Reibschweißverbindung die Rasthaken (13, 13') sich vollständig innerhalb der Kontur des Wasserkastens (5) befinden.

7. Wärmetauscher nach Anspruch 4, **dadurch gekennzeichnet,** daß die Rasthaken (13, 13') und Aussparungen (11, 11') mit schräg verlaufenden Leitflächen (14, 15) versehen sind.

8. Wärmetauscher nach Anspruch 1 und 3, **dadurch gekennzeich****net,** daß der Rohrboden (4) mit den Rasthaken (13, 13', 18) einstückig ausgebidet ist.

9. Wärmetauscher nach Anspruch 3, **dadurch gekennzeichnet,** daß die Rasthaken (13, 13', 18) an den Schmalseiten (8) der Rohrbodenfläche angeordnet sind.

10. Wärmetauscher nach Anspruch 9, **dadurch gekennzeichnet,** daß der Rasthaken (13') und die Öffnung (11') einer Schmalseite breiter sind als der Rasthaken (13) und die Öffnung (11) an der anderen Schmalseite.

## Claims

1. A heat exchanger with a plastic tube bottom (4) and a plurality of parallel tubes (1), the ends of which are sealingly accommodated in the tube bottom (4), and with a plastic water tank (5) which is secured in liquid-tight fashion by means of friction weldings on the tube bottom (4), both the tube bottom (4) and the water tank (5) having a level surface (16, 17) used for the friction weld connection, characterized in that the water tank (5) has an edge (19) , and in that means (13, 13') are provided on the tube bottom (4) for positive rear engagement with the edge (19), the said means and edge remaining in operative connection only until the friction welding connection has been created.

2. A heat exchanger with a plastic tube bottom (4) and a plurality of parallel tubes (1), the ends of which are sealingly accommodated in the tube bottom (4), and with a plastic water tank (5) which is secured in liquid-tight fashion by means of friction weldings on the tube bottom (4), both the tube bottom (4) and the water tank (5) having a level surface (16, 17) used for the friction weld connection, characterized in that the tube bottom (4) has an edge, and means are provided on the water tank (5) for positive rear engagement with the edge, the means and edge remaining in operative connection only until the friction welding connection has been created.

3. A heat exchanger according to either claim 1 or claim 2, characterized in that the means comprise at least two catches (13, 13') mounted on opposite sides (7, 8) of the water tank (5) or tube bottom (4).

4. A heat exchanger according to claim 3, characterized in that, on the tube bottom (4) or water tank (5), recesses (11, 11') are provided into which the catches (13, 13') engage.

5. A heat exchanger according to claim 4, characterized in that the catches (13, 13') and recesses (11, 11') are asymmetrically mounted relative to the tube bottom surface.

6. A heat exchanger according to claims 1 and 4, characterized in that the form of the recesses (11, 11') and the length of the catches (13, 13' and 18) are so designed that after the friction welding connection has been produced, the catches (13, 13') are situated completely inside the outline of the water tank (5).

7. A heat exchanger according to claim 4, characterized in that the catches (13, 13') and recesses (11, 11') are provided with slantingly extending guide surfaces (14, 15).

8. A heat exchanger according to claims 1 and 3, characterized in that the tube bottom (4) is formed integrally with the catches (13, 13', 18).

9. A heat exchanger according to claim 3, characterized in that the catches (13, 13', 18) are mounted on the narrow sides (8) of the tube bottom surface.

10. A heat exchanger according to claim 9, characterized in that the catch (13') and the opening (11') of a narrow side are wider than the catch (13) and the opening (11) on the other narrow side.

## Revendications

1. Echangeur de chaleur comprenant un plateau tubulaire (4) en matière plastique et de multiples tubes parallèles (11) dont les extrémités sont logées de manière étanche dans le plateau tubulaire (4), ainsi qu'une boite à eau (5) de matière plastique qui est fixée de manière étanche au plateau tubulaire (4) par soudage à friction, le plateau tubulaire (4) ainsi que la boite à eau (5) ayant une surface plane (16, 17), ces deux surfaces servant à la liaison par soudage à friction, caractérisé en ce que la boite à eau (5) comporte une arête (19) et en ce que des moyens (13, 13') destinés à se loger par complémentarité de formes derrière l'arête (19) sont prévus sur le plateau tubulaire (4), ces moyens et l'arête n'étant en liaison active que jusqu'au moment auquel la liaison par soudage à friction est réalisée.

2. Echangeur de chaleur comprenant un plateau tubulaire (4) de matière plastique et de multiples tubes parallèles (1) dont les extrémités sont logées de manière étanche dans le plateau tubulaire (4), ainsi qu'une boite à eau (5) de matière plastique qui est fixée de manière étanche au plateau tubulaire (4) par soudage à friction, le plateau tubulaire (4) ainsi que la boite à eau (5) ayant une surface plane (16, 17), ces surfaces servant à la liaison par soudage à friction, caractérisé en ce que le plateau tubulaire (4) comporte une arête et des moyens se logeant par complémentarité de formes derrière l'arête étant prévus sur la boite à eau (5), les moyens et l'arête n'étant en liaison active que jusqu'au moment auquel la liaison par soudage à friction est réalisée.

3. Echangeur de chaleur selon la revendication 1 ou 2, caractérisé en ce que les moyens comprennent au moins deux crochets à cliquet (13, 13') disposés sur des côtés opposés (7, 8) de la boite à eau (5) ou du plateau tubulaire (4).

4. Echangeur de chaleur selon la revendication 3, caractérisé en ce que des évidements (11, 11'), dans lesquels pénètrent les crochets à cliquet (13, 13'), sont prévus sur le plateau tubulaire (4) ou sur la boite à eau (5).

5. Echangeur de chaleur selon la revendication 4, caractérisé en ce que les crochets à cliquet (13, 13') et les évidements (11, 11') sont disposés de manière asymétrique par rapport à la surface du plateau tubulaire.

6. Echangeur de chaleur selon les revendications 1 et 4, caractérisé en ce que la forme des évidements (11, 11') et la longueur des crochets à cliquet (13, 13' ainsi que 18) sont conçues de manière qu'après que la liaison par soudage à friction a été effectuée, les crochets à cliquet (13, 13') se trouvent totalement à l'intérieur du contour de la boite à eau (5).

7. Echangeur de chaleur selon la revendication 4, caractérisé en ce que les crochets à cliquet (13, 13') et les évidements (11, 11') comportent des surfaces de guidage obliques (14, 15).

8. Echangeur de chaleur selon les revendications 1 et 3, caractérisé en ce que le plateau tubulaire (4) est réalisé en une pièce avec les crochets à cliquet (13, 13', 18).

9. Echangeur de chaleur selon la revendication 3, caractérisé en ce que les crochets à cliquet (13, 13', 18) sont disposés sur les côtés étroits (8) de la surface du plateau tubulaire.

10. Echangeur de chaleur selon la revendication 9, caractérisé en ce que le crochet à cliquet (13') et l'ouverture (11') d'un côté étroit sont plus larges que le crochet à cliquet (13) et l'ouverture (11) de l'autre côté étroit.
